# EUROPÄISCHE PATENTSCHRIFT

(11) **EP 1 790 916 B1**
(45) Veröffentlichungstag und Bekanntmachung des Hinweises auf die Patenterteilung: **21.05.2014**
(21) Anmeldenummer: 05025573.6
(22) Anmeldetag: 23.11.2005
(51) Int. Cl.: F24H 3/04

(54) **Elektrische Heizvorrichtung mit Toleranz-PTC-Heizelement**
Electric heating device with tolerance PTC heating element
Dispositif de chauffage électrique avec un élément de tolérance et de chauffage à effet CTP

(43) Veröffentlichungstag der Anmeldung: 30.05.2007
(73) Patentinhaber: Eberspächer catem GmbH & Co. KG, 76863 Herxheim bei Landau (DE)
(72) Erfinder: Bohlender, Franz, 76870 Kandel (DE); Walz, Kurt, 76767 Hagenbach (DE)
(74) Vertreter: Grünecker, Kinkeldey, Stockmair & Schwanhäusser

(56) Entgegenhaltungen:
- EP-A- 1 253 031
- EP-A- 1 432 287
- DE-A1- 19 957 452

## Beschreibung

Die Erfindung betrifft eine elektrische Heizvorrichtung, insbesondere als Zusatzheizung für Kraftfahrzeuge, mit PTC-Heizelementen.

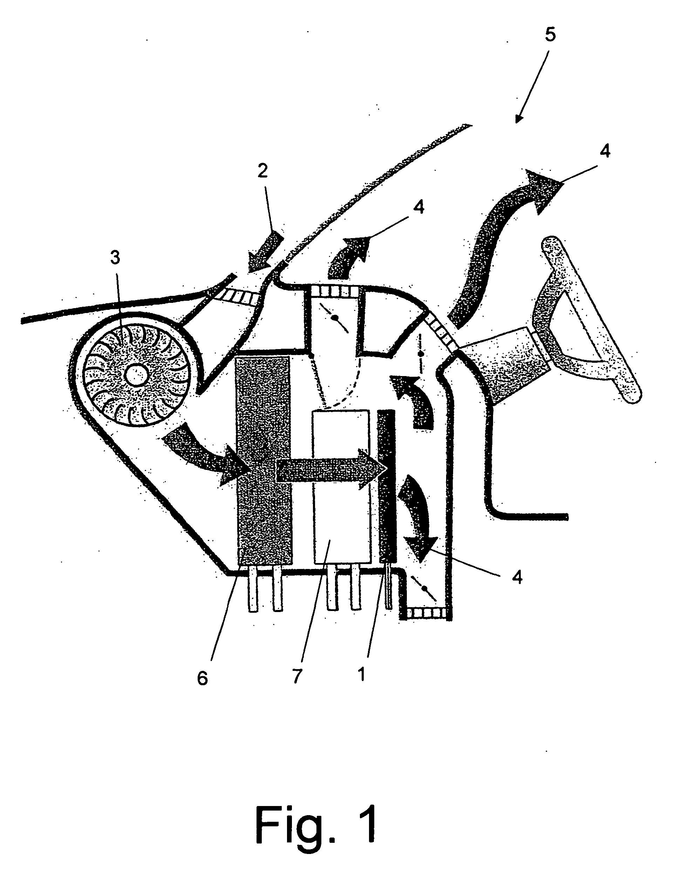

Für den Einsatz in Kraftfahrzeugen, insbesondere Kraftfahrzeugen mit verbrauchsoptimierten Motoren, in denen eine geringe Menge an Wärmeenergie anfällt, werden elektrische Zusatzheizungen zur Beheizung von Innenraum und Motor verwendet. Der Einsatz solcher elektrischer Zusatzheizungen in einem Kraftfahrzeug-Klimagerät ist in Fig. 1 schematisch dargestellt. Das Klimagerät saugt Aussenluft 2 über ein Gebläse 3 an. Die angesaugte Luft durchströmt einen Verdampfer 6, einen Wärmetauscher 7 und die elektrische Heizvorrichtung 1. Anschliessend wird die erwärmte Luft 4 über entsprechende Ausströmer in den Kraftfahrzeuginnenraum 5 geleitet.

Für eine elektrische Zusatzheizung in Kraftfahrzeugen werden vorzugsweise PTC-Heizelemente eingesetzt, die mit Radiatorelementen zur Abgabe der Wärme an die angesaugte Luft in wärmeleitender Verbindung stehen. Die Gesamtanordnung aus einem geschichteten Aufbau von PTC-Heizelementen und Radiatorelementen ist im Allgemeinen zur Erhöhung des Wirkungsgrads der Heizung in einer Klemmpressung in der Heizung gehalten. Durch die Klemmung wird eine hohe elektrische und thermische Kontaktierung der PTC-Heizelemente erreicht. In der EP 1 432 287 A1 ist der Aufbau einer solchen Zusatzheizung dargestellt.

PTC-Heizelementen sind temperaturabhängige Halbleiterwiderstände, die sich bei Stromzufuhr erwärmen, wobei sich zugleich der Widerstand der Heizelemente erhöht. Aufgrund der selbstregelnden Eigenschaften der PTC-Heizelemente kann eine Überhitzung sicher verhindert werden.

Die in elektrischen Heizungen eingesetzten PTC-Heizelemente bestehen aus Keramik und weisen eine flache, im Allgemeinen rechteckige Bauform auf. Den Keramikscheiben wird über die sich gegenüberliegenden grossen Aussenflächen Strom zugeführt. Gleichzeitig wird über diese Flächen die Wärme abgeleitet. Die grossen Flächen der PTC-Heizelemente müssen daher in elektrisch wie thermisch guter Verbindung zu den benachbarten Flächen stehen.

Die Nennheizleistung, d.h. Sollheizleistung, einer elektrischen Heizvorrichtung ergibt sich aus der Summe der Nennheizleistungen der in der Heizung eingesetzten PTC-Heizelemente. Aus Kostengründen werden ausschliesslich PTC-Heizelemente gleicher Nennheizleistung verwendet, und zwar nicht nur für eine einzelne Heizung oder einen bestimmten Heizungstyp, sondern vorzugsweise für alle elektrischen Heizungen eines Herstellers.

Im Allgemeinen sind die PTC-Heizelemente einer Heizung auf eine Mehrzahl separat ansteuerbarer Heizstufen verteilt. Jede der Heizstufen ist zur Erzielung einer bestimmen Nennheizleistung ausgelegt und weist deshalb eine entsprechende Anzahl von PTC-Heizelementen auf.

Herstellungsbedingt weicht die Heizleistung eines PTC-Heizelementes oft erheblich von seiner Nennleistung ab. Die üblichen Abweichungen des R25-Wertes, also des Widerstandswerts bei einer Raumtemperatur von 25° Celsius, liegen zwischen 35% und 50%. Der Mittelwert der Abweichungen differiert chargenbezogen, d.h. von einer geschlossenen Menge dotiertem Pulver und Sintermenge.

Zur Berücksichtigung der herstellungsbedingten Abweichungen der PTC-Heizelemente von der Nennheizleistung kann die Ist-Heizleistung einer Heizung/einer Heizstufe innerhalb eines vorgegebenen Toleranzbereichs variieren. Im ungünstigsten Fall kommen in einer Heizung/Heizstufe nur PTC-Elemente mit gleich grosser Abweichung von der Nennheizleistung zum Einsatz. Die einzelnen Abweichungen können sich dabei so summieren, dass die zulässigen Toleranzgrenzen der Heizung/Heizstufe über- oder unterschritten werden.

Um ein Über- oder Unterschreiten der Toleranzgrenzen zu vermeiden, werden gemäß DE 199 57 452 A PTC-Heizelemente mit sich kompensierenden Abweichungen in einer Heizung/Heizstufe kombiniert. Durch eine solche Kombination von entgegengesetzten Abweichungen können PTC-Heizelemente verwendet werden, deren Abweichungen im Vergleich zu den Toleranzen der Heizung/Heizstufe relativ groß sind. Nachteilig an dieser Vorgehensweise ist jedoch der dazu erforderliche Selektions- und Bevorratungsaufwand. Es muss nämlich zunächst die individuelle Abweichung einzelner PTC-Heizelemente erfasst werden. Anschließend muss für einen ununterbrochenen Fertigungsprozess eine Lagerhaltung mit PTC-Heizelementen unterschiedlicher Abweichung in ausreichender Stückzahl durchgeführt werden.

Aufgabe der Erfindung ist es daher, eine elektrische Heizung mit einem verbesserten Aufbau und ein entsprechendes Herstellungsverfahren anzugeben, so dass bei einem kontinuierlichen Herstellungsprozess, beispielsweise einer Fließbandfertigung, eine aufwendige Lagerhaltung großer Stückzahlen von PTC-Heizelementen nach Abweichungen sortiert entfällt.

Diese Aufgabe wird mit den Merkmalen der unabhängigen Ansprüche gelöst.

Es ist der besondere Ansatz der vorliegenden Erfindung, dass bei der Fertigung einer elektrischen Heizung zusätzlich zu PTC-Heizelementen mit einer festen Standard-Nennheizleistung weitere PTC-Heizelemente mit einer einzigen, zweiten vorbestimmten Nennheizleistung zum Einsatz kommen. Durch die ausschließliche Verwendung von PTC-Heizelementen mit nur zwei standardisierten Nennheizleistungen kann die Herstellung von elektrischen Heizungen in größerer Stückzahl deutlich vereinfacht werden. Eine Vorsortierung und Bevorratung von PTC-Heizelementen mit bestimmten Abweichungen und in ausreichender Stückzahl entfällt.

Gemäß einem ersten Aspekt betrifft die Erfindung eine elektrische Zusatzheizung für ein Kraftfahrzeug. Die Heizung umfasst eine Mehrzahl von Heizstufen mit jeweils wenigstens einem PTC-Heizelement, wobei die PTC-Heizelemente dieselbe erste Nennheizleistung besitzen. Außerdem umfasst die Heizung eine Mehrzahl von Radiatorelementen zur Abgabe der erzeugten Wärme an ein die Radiatorelemente durchströmendes Medium. Wenigstens eine der Heizstufen enthält ein Toleranz-PTC-Heizelement mit einer zweiten Nennheizleistung zur Korrektur von herstellungsbedingten Abweichungen der Heizleistung des wenigstens einem PTC-Heizelements von der ersten Nennheizleistung. Die zweite Nennheizleistung ist dabei kleiner als die erste Nennheizleistung.

Gemäß einem zweiten Aspekt betrifft die Erfindung ein Herstellungsverfahren für eine elektrische Zusatzheizung für ein Kraftfahrzeug. Bei dem Herstellungsverfahren wird die elektrische Heizung zu einem geschichteten Aufbau aus einer Mehrzahl von Ebenen von PTC-Heizelementen und Radiatorelementen zur Abgabe der Wärme an ein die Radiatorelemente durchströmendes Medium zusammengesetzt. Jede der Ebenen mit PTC-Heizelementen weist wenigstens ein PTC-Heizelement auf. Alle PTC-Heizelemente besitzen dieselbe Nennheizleistung. Die aufgrund der ersten Nennheizleistung der PTC-Heizelemente vorgesehene Anzahl von PTC-Heizelementen einer Ebene wird durch Einfügen eines Toleranz-PTC-Heizelementes mit einer zweiten Nennheizleistung oder durch Ersatz eines PTC-Heizelementes mit der ersten Nennheizleistung durch ein Toleranz-PTC-Heizelement mit der zweiten Nennheizleistung korrigiert. Auf diese Weise werden herstellungsbedingte Abweichungen der Heizleistung des wenigstens einen PTC-Heizelementes von der ersten Nennheizleistung in einer Ebene ausgeglichen. Dabei ist die zweite Nennheizleistung kleiner als die erste Nennheizleistung.

Die Nennheizleistung des Toleranz-PTC-Heizelementes beträgt vorteilhafter Weise ein Bruchteil der ersten Nennheizleistung des Standard-PTC-Heizelementes, vorzugsweise die Hälfte, ein Drittel oder ein Viertel der ersten Nennheizleistung.

Die Abmessungen des Toleranz-PTC-Heizelementes entsprechen vorzugsweise denen des Standard-PTC-Heizelementes. Dadurch ist das Toleranz-PTC-Heizelement besonders einfach in den bestehenden Aufbau und Fertigungsprozess einer Heizung integrierbar. Es können unter anderem dieselben Positioniermittel verwendet werden, die auch schon für Standard-PTC-Heizelemente bereitgehalten werden. Dabei weist das Toleranz-PTC-Heizelement vorteilhafterweise dieselbe Dicke und insbesondere auch dieselbe Länge und/oder Breite des Standard-PTC-Heizelementes auf.

Die Nennheizleistung der Standard-PTC-Heizelemente liegt vorzugsweise zwischen 50 Watt und 100 Watt, insbesondere bei 70 Watt.

Die elektrische Heizung besteht vorzugsweise aus einem geschichteten Aufbau aus PTC-Heizelementen und Radiatorelementen.

Vorzugsweise werden die PTC-Heizelemente einer Ebene in einem Positionsrahmen gehalten. Dabei weist jeder Positionsrahmen gemäß einer besonderen Ausgestaltung der Erfindung jeweils nur Öffnungen für die tatsächlich eingesetzten PTC-Heizelemente auf. Dazu werden vorzugsweise Positionsrahmen mit einer unterschiedlichen Anzahl von Öffnungen für PTC-Heizelemente bereitgehalten und bei der Fertigung wird der jeweils passende Positionsrahmen ausgewählt.

Gemäß einer anderen bevorzugten Ausführungsform ist in dem geschichteten Aufbau in einer Ebene eine feste Anzahl von Plätzen für PTC-Heizelemente vorgesehen. Bei der Herstellung werden für PTC-Heizelemente nicht benötigte Plätze mit Dummy-Elementen aufgefüllt. Mit einem solchen Aufbau lässt sich in einfacher Weise die Anzahl der PTC-Heizelemente pro Ebene variieren, insbesondere erfindungsgemäß ein Toleranz-PTC-Heizelement hinzufügen.

Vorzugsweise ist die elektrische Zusatzheizung für einen Niederspannungsbetrieb, also für Bordnetzspannungen kleiner als etwa 120 Volt, ausgelegt.

Weitere vorteilhafte Ausgestaltungen der Erfindung sind Gegenstand der Unteransprüche.

Im Folgenden wird die vorliegende Erfindung anhand bevorzugter Ausführungsformen im Zusammenhang mit den beiliegenden Zeichnungen erläutert. Dabei zeigen die Zeichnungen im Einzelnen:
- Fig. 1: eine schematische Darstellung eines Klimagerätes für ein Kraftfahrzeug mit einer elektrischen Heizvorrichtung,
- Fig. 2: eine Seitenansicht einer ersten Bauform einer elektrischen Heizvorrichtung,
- Fig. 3: eine Aufsicht auf eine elektrische Heizvorrichtung gemäß der ersten Bauform,
- Fig. 4: einen Positionsrahmen zur Positionierung von PTC-Heizelementen in der elektrischen Heizvorrichtung gemäß der ersten Bauform,
- Fig. 5: eine perspektivische Ansicht eines Radiatorelementes mit Standard-PTC-Heizelementen, Dummy-Elementen und einem Toleranz-PTC-Heizelement,
- Fig. 6: eine perspektivische Ansicht einer teilbestückten Gehäuse-Halbschale einer elektrischen Heizvorrichtung gemäß einer zweiten Bauform,
- Fig. 7: eine weitere perspektivische Ansicht einer teilweisen bestückten Gehäuse-Halbschale des Gehäuses der Heizvorrichtung gemäß der zweiten Bauform,
- Fig. 8: eine perspektivische Ansicht der aus zwei Gehäuse-Halbschalen zusammengesetzten elektrischen Heizvorrichtung gemäß der zweiten Bauform,
- Fig. 9: eine perspektivische Ansicht der elektrischen Heizvorrichtung gemäß der zweiten Bauform mit einem teilweise eingeschobenen Federelement,
- Fig. 10: eine perspektivische Ansicht der Heizvorrichtung der zweiten Bauform mit einem abweichenden Aufbau,
- Fig.11: eine weitere perspektivische Ansicht des Aufbaus der Heizvorrichtung gemäß Fig. 10,
- Fig. 12: eine perspektivische Teilansicht der Heizvorrichtung gemäß Fig. 10 und
- Fig. 13: eine perspektivische Ansicht eines weiteren abweichenden Aufbaus der zweiten Bauform einer elektrischen Heizvorrichtung.

Die vorliegende Erfindung vereinfacht den Herstellungsprozess für eine Serienfertigung elektrischer Heizungsvorrichtungen, und zwar durch den Einsatz eines Toleranz-PTC-Heizelementes. Das Toleranz-PTC-Heizelement gleicht Abweichungen der Ist-Heizleistung einer Heizung/Heizstufe aus und vermeidet damit die herkömmliche Bevorratung von PTC-Heizelementen mit von der Nennheizleistung abweichender Ist-Heizleistung.

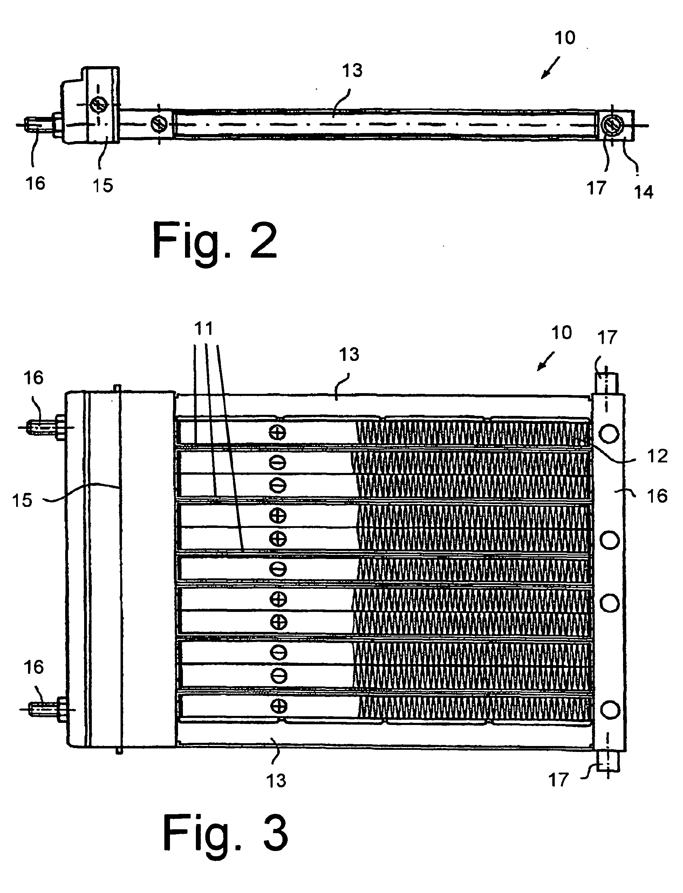

Der erfindungsgemäße Einsatz eines Toleranz-PTC-Heizelementes ist unabhängig von der Bauform der Heizvorrichtung. In Zusammenhang mit den Figuren 2 bis 13 wird beispielhaft der Aufbau unterschiedlicher Heizvorrichtungen beschrieben. Gemeinsam ist den Heizvorrichtungen ein Heizregister mit einem geschichteten Aufbau aus PTC-Heizelementen und Radiatorelementen. Die Anwendung der vorliegenden Erfindung ist jedoch nicht auf die beispielhaft dargestellten Ausführungsformen beschränkt.

Eine erste Ausführungsform einer elektrischen Heizvorrichtung, die insbesondere für den Einsatz in Kraftfahrzeugen geeignet ist, ist in den Figuren 2 und 3 dargestellt.
Fig. 2 zeigt eine Seitenansicht, Fig. 3 eine Aufsicht auf die elektrische Heizvorrichtung der ersten Ausführungsform. Die Heizvorrichtung 10 besitzt ein Heizregister aus einer Mehrzahl in einem geschichteten Aufbau angeordneten Ebenen 11 von Heizelementen und Radiatorelementen 12. Die Heizelemente sind jeweils benachbart zu den Radiatorelementen 12 zur Abgabe der erzeugten Wärme an ein die Radiatorelemente 12 durchströmendes Medium angeordnet.

Das in den Figuren 2 und 3 gezeigte Heizregister ist in einem Rahmen gehalten, der aus gegenüberliegend angeordneten Längsholmen 13 und senkrecht zu diesen angeordneten Seitenholmen 14 und 15 besteht. Die Rahmenholme sind vorzugsweise aus Metall oder Kunststoff gefertigt.

In der in Fig. 2 und 3 gezeigten Ausführungsform ist der Seitenholm 15 als einseitig offener Kasten ausgebildet. Die Öffnung dieses kastenförmigen Seitenholms liegt auf der dem Heizregister gegenüberliegenden Seite. In diesem Kasten ist eine Steuervorrichtung einsetzbar, die die Wärmeabgabe der einzelnen Ebenen von PTC-Heizelementen (Heizstufen) reguliert. Die offene Seite des Seitenholms 15 wird nach dem Einsetzen der Steuervorrichtung mit einem aufsteckbaren oder aufklipsbaren Deckel verschlossen.

Der von der Steuervorrichtung auf die einzelnen Heizstufen aufgeteilte Strom wird über Anschlussbolzen 16 der Heizung zugeführt. Zusätzlich ist der Seitenholm 15 mit einem Steckersockel zur externen Ansteuerung ausgestattet. Vorzugsweise werden externe Steuersignale über einen Kraftfahrzeugbus zugeführt.

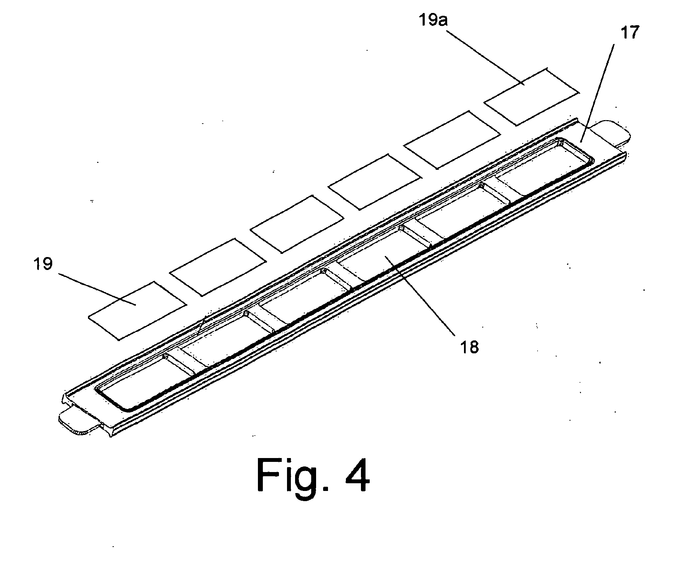

In den einzelnen Ebenen 11 mit PTC-Heizelementen werden diese mit Hilfe eines Positionierungsmittels gehalten. In Fig. 4 ist zu diesem Zweck ein Positionsrahmen 17 dargestellt. Der Positionsrahmen 17 weist eine Anzahl von Öffnungen 18 auf, die der Anzahl der für die entsprechende Heizebene 11 vorgesehenen PTC-Elemente 19 entspricht. Für den Fertigungsprozess werden deshalb Positionsrahmen 17 mit einer unterschiedlichen Anzahl von Öffnungen 18 bereitgehalten.

Die Korrektur der Ist-Heizleistung einer Heizebene/Heizstufe erfolgt erfindungsgemäß durch Einsatz eines Toleranz-PTC-Heizelementes 19a. Ist die Ist-Heizleistung einer Heizung/Heizstufe deutlich niedriger als die Nennheizleistung, kann mit Hilfe eines zusätzlich eingesetzten Toleranz-PTC-Heizelementes 19a die Differenz so ausgeglichen werden, dass die Gesamtheizleistung wieder im vorgegebenen Toleranzbereich liegt. Dazu wird ein Positionsrahmen 17 mit einer zusätzlichen Öffnung 18 für das Toleranz-PTC-Heizelement 19a verwendet. Bei einer gegenüber der Nennheizleistung zu großen Ist-Heizleistung wird erfindungsgemäß eines der PTC-Heizelemente 19 durch das Toleranz-PTC-Heizelement 19a ersetzt. Ein Austausch des Positionsrahmens 17 ist dabei nicht erforderlich, wenn das Toleranz-PTC-Heizelement 19a im Wesentlichen dieselbe Größe wie das PTC-Heizelement 19 aufweist.

Es ist der besondere Vorteil bei Ausgestaltung des Toleranz-PTC-Heizelementes 19a mit im wesentlichen derselben Größe wie das PTC-Heizelement 19, dass die konventionellen Positionsrahmen 17 weiterverwendet werden können. Zusätzliche Positionsrahmen mit einer speziellen Gestaltung der Öffnungen für ein Toleranz-PTC-Heizelement sind dann nicht erforderlich. Alternativ können jedoch auch Toleranz-PTC-Heizelemente 19a mit einer anderen Bauform als die der PTC-Heizelemente 19 verwendet werden. In dem Fall ist jedoch eine entsprechende Anpassung der Positionsrahmen 17 und die zusätzliche Bevorratung von Positionsrahmen für den Einsatz der Toleranz-PTC-Heizelemente erforderlich.

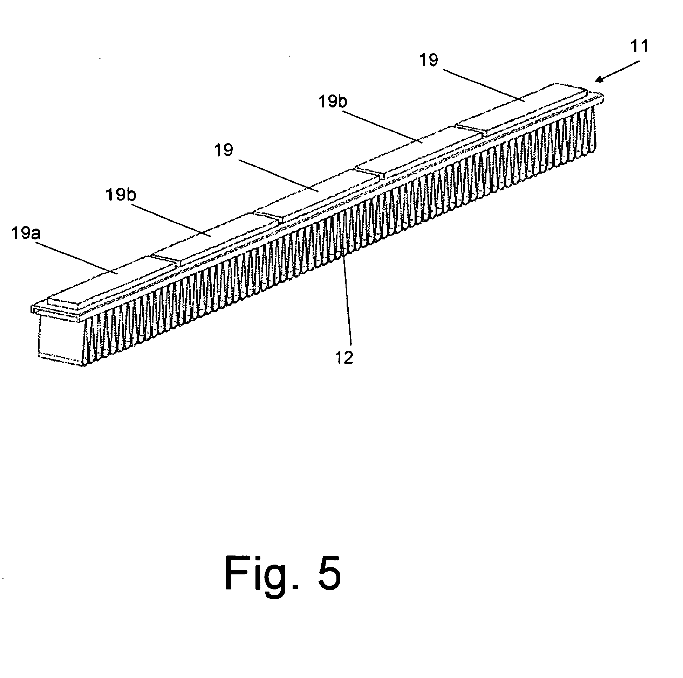

Eine alternative Ausführungsform einer Heizvorrichtung, die ohne den Einsatz von Positionsrahmen auskommt, ist in Fig. 5 gezeigt. Insgesamt werden in einer Ebene 11 dieses Beispiels jeweils fünf gleich große Bauelemente verwendet. In Abhängigkeit von der gewünschten Nennheizleistung sind in diesem Beispiel zwei Standard-PTC-Heizelemente 19 an der mittleren und einer Randposition eingesetzt und zwei Dummy-Elemente 19b benachbart zur mittleren Position. Außerdem kommt ein Toleranz-PTC-Heizelement 19a zum Einsatz, und zwar an der anderen Randposition. Ist kein Toleranz-PTC-Heizelement erforderlich, wird stattdessen je nach Auslegung der Heizstufe ebenfalls ein Dummy-Element oder ein Standard-PTC-Heizelement eingesetzt. Durch die Verwendung von Bauelementen gleicher Größe ist keine Anpassung der Bestückung an den Einsatz des erfindungsgemäßen Toleranz-PTC-Heizelementes erforderlich, sondern das Toleranz-PTC-Heizelement ersetzt einfach entweder ein Standard-PTC-Heizelement oder eines der Dummy-Elemente.

Die vorliegende Erfindung verwendet nur zwei Arten von PTC-Heizelementen, nämlich ein Standard-PTC-Heizelement 19 mit einer fest vorgegebenen Standard-Nennheizleistung und zusätzlich ein Toleranz-PTC-Heizelement 19a mit einer davon abweichenden, jedoch ebenfalls fest vorgegebenen Nennheizleistung. Die Nennheizleistung des Standard-PTC-Heizelementes 19 liegt vorzugsweise im Bereich zwischen 50 und 100 Watt, bevorzugt in der Größenordnung von etwa 70 Watt.

Das Toleranz-PTC-Heizelement 19a weist vorzugsweise eine Nennheizleistung mit einem Bruchteil der Nennheizleistung des Standard-PTC-Heizelementes 19 auf. Insbesondere weist das Toleranz-PTC-Heizelement 19a eine Nennheizleistung auf, die in etwa der Hälfte der Nennheizleistung des Standard-PTC-Heizelementes 19 entspricht. In Abhängigkeit von der mittleren Größe der Abweichungen der Ist-Heizleistung der Standard-PTC-Heizelemente 19 und der einzuhaltenden Toleranz der Heizung/Heizstufe kann für das Toleranz-PTC-Heizelement 19a auch eine größere oder kleinere Nennheizleistung festgelegt werden. Wesentlich ist, dass bei dem Fertigungsprozess ein Toleranz-PTC-Heizelement mit nur einer einzigen von der Nennheizleistung der Standard-PTC-Heizelemente 19 unterschiedlichen Nennheizleistung eingesetzt wird. Damit kann der Zusatzaufwand besonders gering gehalten werden.

Pro Heizstufe wird nur maximal ein einziges Toleranz-PTC-Heizelement 19a eingesetzt, unabhängig von der Anzahl der Standard-PTC-Heizelemente 19. Jede Ebene 11 mit PTC-Heizelementen in Fig. 3 kann eine eigene Heizstufe darstellen. Es können jedoch auch mehrere Ebenen 11 zu einer Heizstufe zusammengefasst werden. In dem Fall wird ebenfalls nur maximal ein einzelnes Toleranz-PTC-Heizelement pro Heizstufe eingesetzt, und zwar für eine Mehrzahl von Ebenen 11 mit PTC-Heizelementen, nämlich die Ebenen 11 der Heizstufe.

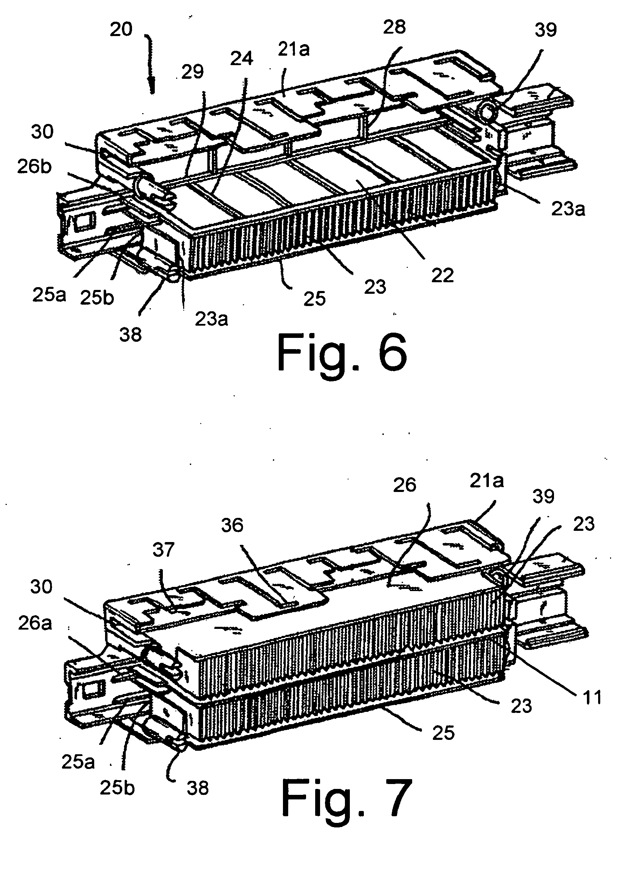

Nachfolgend wird die Erfindung im Zusammenhang mit anderen Ausgestaltungen der Heizvorrichtung beschrieben. In den Figuren 6 bis 9 wird die Herstellung einer Heizung 20 dargestellt, die aus zwei Kunststoffhalbschalen 21 a, 21 b zusammengesetzt ist. Der besondere Vorteil dieses Aufbaus liegt darin, dass sich bei der Fertigung zunächst in einfacher Weise eine der Gehäuse-Halbschalen bestücken lässt und anschließend die Heizung 20 durch Aufsetzen der zweiten Halbschale vervollständigt wird.

Eine erste Stufe des Herstellungsprozesses ist in Fig. 6 in einer perspektivischen Ansicht gezeigt. In die Halbschale 21 a sind ein Kontaktblech 25, ein Radiatorelement 23 und benachbart dazu PTC-Heizelemente 22 eingesetzt. Zur Erleichterung des Zusammenbaus sind jeweils Führungsschienen bzw. Positioniermittel für alle Komponenten vorgesehen. Insbesondere wird die Position der Kontaktplatte 25 mit einem Kontaktstift 25a beim Einsetzen über die Führung 25b definiert (entsprechendes gilt für die Kontaktplatte 26 in Fig. 7). Die Radiatorelemente 23 sind vorzugsweise in Form von Wellrippenelementen ausgebildet. Auf einer Seite ist das Wellrippenelement mit einer Kontaktplatte versehen. Für die Enden der Kontaktplatte des Wellrippenelementes 23 sind seitlich in der Innenseite der Gehäusehalbschalen Führungen 23a vorgesehen. Da diese Führungen allein der Erleichterung der Montage dienen, kann auf sie in einer alternativen Ausführungsform verzichtet werden.

Zur Erleichterung des Einsetzens der PTC-Heizelemente 22 und für eine Isolierung der Heizelemente 22 im eingebauten Zustand voneinander sind in der Halbschale Positioniermittel 24 vorgesehen. Bei diesen Positioniermitteln kann es sich um einen Positionsrahmen handeln, wie er im Prinzip entsprechend für eine anders ausgestaltete Heizung im Zusammenhang mit Fig. 5 beschrieben ist. Alternativ können die Positioniermittel in Form von Vorsprüngen an einer Längsstrebe 29 der seitlichen Gehäusestirnseiten befestigt sein und nach innen in das Gehäuse ragen.

Wie in Fig. 7 dargestellt, sind oberhalb der PTC-Heizelemente 22 wiederum ein Radiatorelement 23 und eine Kontaktplatte 26 mit einem Steckkontakt 26a vorgesehen -entsprechend zu dem in Fig. 6 gezeigten Aufbau.

Auf die so bestückte erste Gehäuse-Halbschale 21 a ist die zweite Gehäuse-Halbschale 21 b aufsteckbar. Beide Gehäusehalbschalen 21 a, 21 b sind vorzugsweise so ausgebildet, dass ihre Trennlinie etwa in der Mitte zwischen den beiden länglichen Gehäusestirnseiten mit den Durchlassöffnungen für die durchströmende Luft verläuft.

Das Zusammensetzen der beiden Gehäuse-Halbschalen kann besonders dadurch vereinfacht werden, dass beide Halbschalen mit Rastzapfen 38 und entsprechenden Bohrungen 39 in der jeweils gegenüberliegenden Halbschale versehen sind. Beim Zusammenstecken verrasten beide Halbschalen, so dass die zweite Halbschale mechanisch auf der ersten Halbschale 21 a fixiert ist.

In Fig. 6 ist eine Mehrzahl von Plätzen für PTC-Heizelemente 22 dargestellt. Bei Verwendung eines Positionsrahmens kann die Anzahl der Öffnungen variabel an den tatsächlichen Bedarf angepasst werden. Vorzugsweise sind jedoch die entsprechenden Positionen für PTC-Heizelemente durch an der Längsrippe 29 vorgesehene Vorsprünge fest vorgegeben.

Ist die Anzahl der tatsächlich eingesetzten PTC-Heizelemente 22 geringer als die der vorgesehenen Anzahl von Plätzen, so werden die nicht besetzten Plätze mit Dummy-Elementen belegt. Auf diese Weise ist die Belegung an die tatsächlich benötigte Anzahl von PTC-Heizelementen anpassbar. Dementsprechend wird bei Bedarf ein zusätzliches Toleranz-PTC-Heizelement anstelle eines Dummy-Elementes eingesetzt.

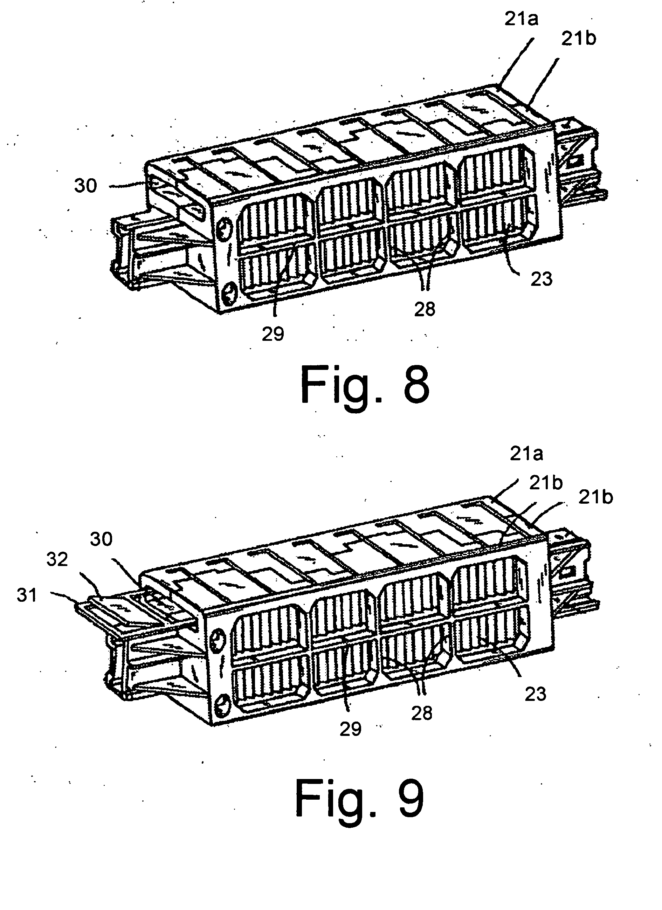

Die aus zwei Gehäusehalbschalen zusammengesetzte Heizvorrichtung ist in Fig. 8 dargestellt. Jede der Gehäusehälften 21 a, 21 b weist an den länglichen Gehäusestirnseiten Öffnungen für die durchströmende Luft auf. An der Mittelstrebe 29 sind gemäß einer bevorzugten Ausführungsform die in das Gehäuse ragenden Positioniermittel befestigt.

Zur Erhöhung der Effizienz der Wärmeerzeugung durch die PTC-Heizelemente wird der geschichtete Aufbau innerhalb des Gehäuses in einer Klemmpressung gehalten. Diese Klemmung wird von einem zusätzlichen Federelement 31 bewirkt. Das Federelement wird nach dem Zusammensetzen der beiden Gehäusehalbschalen 21 a, 21 b in eine seitliche Öffnung 30 des Gehäuses eingeschoben. Vorzugsweise wird das Federelement 31 wenigstens an der Ober- oder Unterseite des Gehäuses zwischen der Gehäuseinnenseite und dem geschichteten Aufbau eingeschoben. Ein solches Federelement kann aber auch an jeder anderen Stelle innerhalb des geschichteten Aufbaus eingeschoben werden. Zur Erhöhung der Klemmpressung kann eine Mehrzahl von Federelementen 31 in einer Heizung eingesetzt werden.

Damit das Gehäuse in der Lage ist, die Klemmkräfte ohne Verformung des Gehäuses aufzunehmen, sind die länglichen Gehäusestirnseiten mechanisch verstärkt ausgebildet. Durch eine mechanische Verstärkung der Gehäusestirnseiten durch Querverstrebungen 28 und Längsverstrebungen 29, kann das Gehäuse ausreichend hohe Klemmkräfte ohne eine Durchbiegung oder Verformung aufnehmen.

Die Querverstrebungen 28 und die eine oder mehrere Längsstreben 29 weisen vorzugsweise die Form einer Gitterstruktur auf. Mit einer solchen Gitterstruktur können die Streben selbst besonders dünn gehalten werden, um eine Behinderung des Luftdurchsatzes zu vermeiden.

Zur Aufnahme der Klemmkräfte sind zusätzlich die oberen und unteren Seiten bei den Gehäusehalbschalen 21 a, 21 b mechanisch verstärkt. Zu diesem Zweck sind auf der Ober- und Unterseite jeder Halbschale Vorsprünge 36 und Vertiefungen 37 vorgesehen. Die Vorsprünge und Vertiefungen sind gegenüberliegend in den beiden Gehäusehalbschalen angeordnet. Beim Zusammensetzen der Gehäusehalbschalen greifen sie ineinander und verstärken auf diese Weise die mechanische Stabilität der Ober- und Unterseiten.

Da das Gehäuse erst nach dem Zusammensetzen in der Lage ist, hohe Klemmkräfte ohne Verformung aufzunehmen, wird das Federelement 31 erst nach dem Zusammenbau in die entsprechende Öffnung 30 eingeschoben, die vorzugsweise an den Gehäuseschmalseiten vorgesehen ist. Die Öffnung 30 wird durch entsprechende Ausnehmungen in den Gehäusehalbschalen beim Zusammensetzen gebildet.

Das Federelement 31 besitzt eine Vielzahl einzelner Federsegmente 32, die den Klemmdruck erzeugen.

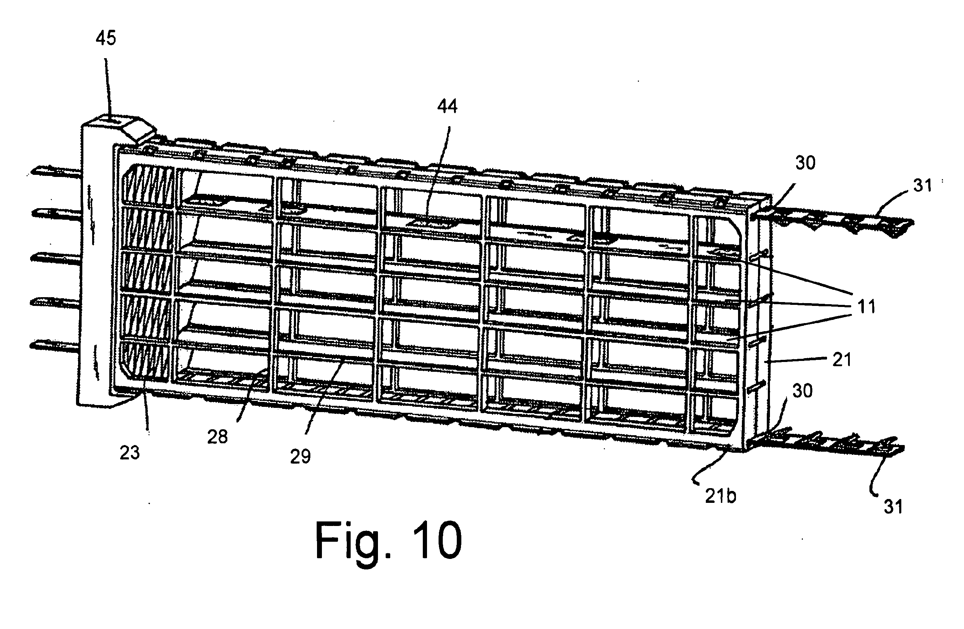

In den Figuren 10 bis 13 sind Varianten zu dem in Zusammenhang mit den Figuren 6 bis 9 beschriebenen Aufbau einer elektrischen Heizvorrichtung dargestellt. Diese Heizvorrichtungen sind gegenüber der in den Figuren 6 bis 9 dargestellten Ausführungsform schmaler, jedoch mit größerer Querschnittsfläche für einen höheren Luftdurchsatz ausgebildet. Dazu weist die dargestellte Heizvorrichtung PTC-Heizelemente in einer Mehrzahl von Ebenen 11 auf. Im Gegensatz zu der Ausführungsform gemäß Fig. 6 sind die rechteckigen PTC-Heizelemente mit Ihren Längsseiten parallel zu den länglichen Gehäusestirnseiten ausgerichtet. Insbesondere weist die Heizvorrichtung aufgrund der größeren Längsausdehnung eine größere Anzahl von Querstreben 28 auf. Zusätzlich ist die Verwendung von zwei Federelementen 31 dargestellt, die jeweils am oberen und unteren Ende auf der Schmalseite des Gehäuses eingeschoben werden.

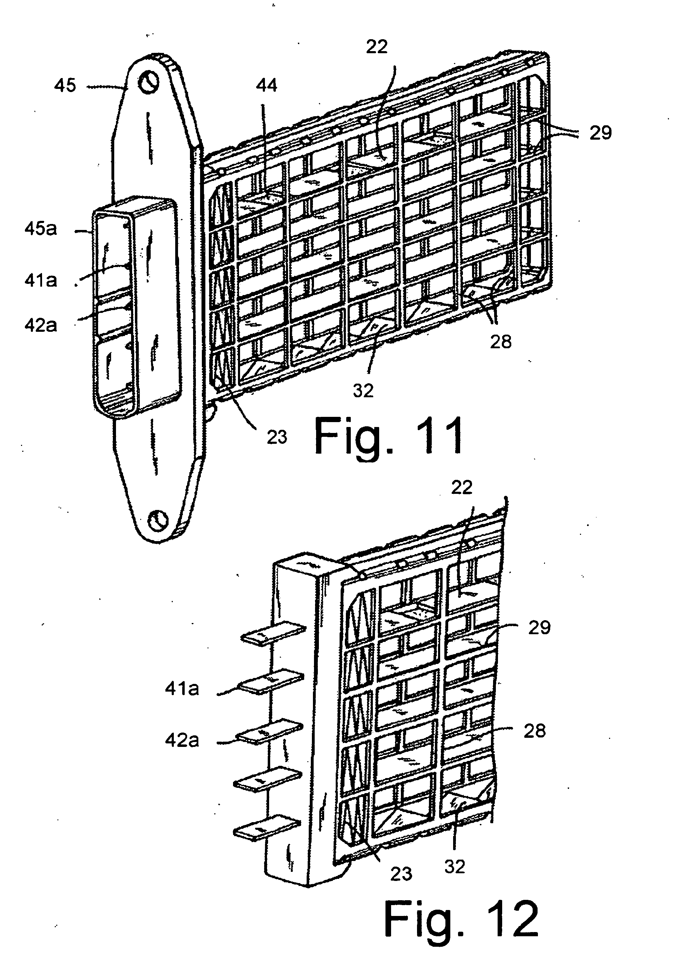

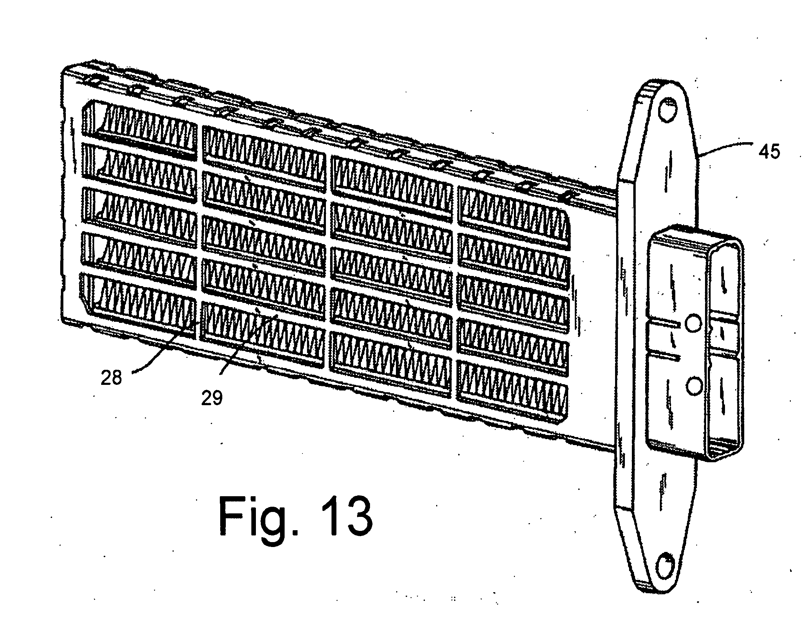

Zur mechanischen Befestigung in einem Kraftfahrzeug und zur elektrischen Kontaktierung werden die Heizregister auf der Seite, auf der die elektrischen Kontaktzungen 41 a, 42a herausragen, mit einem Steckeraufsatz 45 versehen. Der in Fig. 11 und Fig. 13 dargestellte Steckeraufsatz 45 besteht aus einem mechanischen Anschlag mit Befestigungslöchern und einem Steckerschuh 45a, der die Kontaktzungen 41 a, 22a umgibt.

Vorzugsweise werden die Ebenen 11 mit den PTC-Heizelementen 22 an den Längsstreben 29 mit Silikondichtungen gegen das Eindringen von Feuchtigkeit und Schmutzpartikeln abgedichtet. Zur Vereinfachung der Montage der Dichtungen bei der Herstellung weisen die Silikondichtungen vorzugsweise eine der Gitterstruktur der Verstrebungen entsprechende Form auf. Damit kann die Fertigung besonders vereinfacht werden, da die Dichtungen jeweils als Ganzes eingelegt werden können.

Zusammenfassend ermöglicht die vorliegende Erfindung eine bedeutende Vereinfachung des Herstellungsaufwandes für elektrische Heizvorrichtungen mit PTC-Heizelementen einheitlicher Heizleistung. Um die herstellungsbedingten Toleranzen gegenüber der Nennheizleistung ausgleichen zu können, werden herkömmlicherweise große Mengen von PTC-Heizelementen mit entgegengesetzter Abweichung bevorratet. Durch geeignete Kombination der Abweichungen lassen sich damit auch enge Toleranzen der Geamt-Ist-Heizleistung einer Heizung/Heizstufe einhalten. Zur Vermeidung der Selektion und Bevorratung unterschiedlicher Abweichungen werden erfindungsgemäß zusätzliche Toleranz-PTC-Heizelemente bereitgehalten, die einheitlich eine gegenüber dem Standard-PTC-Heizelement kleinere Nennheizleistung, vorzugsweise die halbe Nennheizleistung, besitzen. Durch Verwendung eines zweiten standardisierten Heizelementes, nämlich des Toleranz-PTC-Heizelementes, kann auf eine Bevorratung einer großen Zahl von PTC-Heizelementen mit unterschiedlichen Abweichungen verzichtet und eine kostengünstigere Herstellung ermöglicht werden.

## Patentansprüche

1. Elektrische Zusatzheizung für ein Kraftfahrzeug umfassend:
eine Mehrzahl von Heizstufen mit jeweils wenigstens einem PTC-Heizelement (19), wobei die PTC-Heizelemente (19) dieselbe erste Nennheizleistung besitzen, und
einer Mehrzahl von Radiatorelementen (11) zur Abgabe der erzeugten Wärme an ein die Radiatorelemente (11) durchströmendes Medium,
**dadurch gekennzeichnet, dass**
wenigstens eine der Heizstufen ein Toleranz-PTC-Heizelement (19a) mit einer zweiten Nennheizleistung zur Korrektur von herstellungsbedingten Abweichungen der Heizleistung des wenigstens einen PTC-Heizelementes (19) von der ersten Nennheizleistung enthält, wobei die zweite Nennheizleistung die Hälfte, ein Drittel oder ein Viertel der ersten Nennheizleistung ist.

2. Elektrische Zusatzheizung nach Anspruch 1, wobei die Größe des Toleranz-PTC-Heizelementes (19a) in etwa der der PTC-Heizelemente (19) mit der ersten Nennheizleistung entspricht.

3. Elektrische Zusatzheizung nach Anspruch 1 oder 2, wobei das Toleranz-PTC-Heizelement (19a) dieselbe Dicke wie die PTC-Heizelemente (19) mit der ersten Nennheizleistung besitzt.

4. Elektrische Zusatzheizung nach Anspruch 3, wobei das Toleranz-PTC-Heizelement (19a) zusätzlich dieselbe Länge wie die PTC-Heizelemente (19) mit der ersten Nennheizleistung besitzt.

5. Elektrische Zusatzheizung nach Anspruch 3 oder 4, wobei das Toleranz-PTC-Heizelement (19a) zusätzlich dieselbe Breite wie die PTC-Heizelemente (19) mit der ersten Nennheizleistung besitzt.

6. Elektrische Zusatzheizung nach einem der Ansprüche 1 bis 5, wobei die erste Nennheizleistung einen Wert zwischen 50 Watt und 100 Watt, vorzugsweise einen Wert von 70 Watt aufweist.

7. Elektrische Zusatzheizung nach einem der Ansprüche 1 bis 6, wobei die PTC-Heizelemente (19) in Ebenen in einem geschichteten Aufbau aus PTC-Heizelementen (19) und Radiatorelementen (11) angeordnet sind.

8. Elektrische Zusatzheizung nach Anspruch 7, wobei die PTC-Heizelemente (19) einer Ebene in Positionsrahmen (17) gehalten werden.

9. Elektrische Zusatzheizung nach Anspruch 8, wobei jeder Positionsrahmen (17) Öffnungen (18) nur für die jeweils erforderlichen PTC-Heizelemente (19, 19a) mit der ersten und zweiten Nennheizleistung aufweist.

10. Elektrische Zusatzheizung nach Anspruch 7, wobei in jeder der Ebenen eine vorgegebene Anzahl von Plätzen (23) für PTC-Heizelemente vorgesehen ist und in einer Ebene für PTC-Heizelemente mit der ersten und zweiten Nennheizleistung nicht benötigte Plätze mit Dummy-Elementen aufgefüllt sind.

11. Elektrische Zusatzheizung nach einem der Ansprüche 1 bis 10, wobei die elektrische Zusatzheizung für den Niederspannungsbetrieb ausgelegt ist, insbesondere für Spannungen kleiner als etwa 120V.

12. Herstellungsverfahren für eine elektrische Zusatzheizung für ein Kraftfahrzeug mit den Schritten:
Zusammensetzen der elektrischen Heizung zu einem geschichteten Aufbau aus einer Mehrzahl von Ebenen von PTC-Heizelementen (19) und Radiatorelementen (11) zur Abgabe der Wärme an ein die Radiatorelemente (19) durchströmendes Medium, wobei jede der Ebenen mit PTC-Heizelementen (19) wenigstens ein PTC-Heizelement (19) aufweist und die PTC-Heizelemente (19) dieselbe erste Nennheizleistung besitzen
**gekennzeichnet durch** den Schritt
Korrektur der auf der Grundlage der ersten Nennheizleistung der PTC-Heizelemente (19) vorgesehenen Anzahl von PTC-Heizelementen (19) einer Ebene **durch** Einfügen eines Toleranz-PTC-Heizelementes (19a) mit einer zweiten Nennheizleistung oder durch Ersatz eines PTC-Heizelementes (19) mit der ersten Nennheizleistung **durch** ein Toleranz-PTC-Heizelement (19a) mit der zweiten Nennheizleistung, um herstellungsbedingte Abweichungen der Heizleistung des wenigstens einen PTC-Heizelementes (19) von der ersten Nennheizleistung in einer Ebene auszugleichen, wobei die zweite Nennheizleistung die Hälfte, ein Drittel oder ein Viertel der ersten Nennheizleistung ist.

13. Herstellungsverfahren für eine elektrische Zusatzheizung für ein Kraftfahrzeug nach Anspruch 12, die PTC-Heizelemente (19, 19a) mit der ersten und mit der zweiten Nennheizleistung im Wesentlichen dieselbe Größe besitzen.

## Claims

1. Additional electric heating for a motor vehicle, comprising:
a plurality of heat stages with at least one PTC heating element (19) each, the PTC heating elements (19) having the same first nominal heating power, and
a plurality of radiator elements (11) for dissipating the generated heat to a medium flowing through the radiator elements (11),
**characterized in that**
at least one of the heat stages contains a tolerance PTC heating element (19a) having a second nominal heating power for correcting variations of the heating power of the at least one PTC heating element (19) from the first nominal heating power due to deviations in manufacturing, the second nominal heating power is one half, third, or quarter of the first nominal heating power.

2. Additional electric heating according to claim 1, wherein the dimensions of the tolerance PTC heating element (19a) approximately correspond to those of the PTC heating elements (19) having the first nominal heating power.

3. Additional electric heating according to claim 1 or 2, wherein the tolerance PTC heating element (19a) has a thickness as the PTC heating elements (19) having the first nominal heating power.

4. Additional electric heating according to claim 3 wherein the tolerance PTC heating element (19a) has the same length as the PTC heating elements (19) having the first nominal heating power.

5. Additional electric heating according to claim 3 or 4, wherein the tolerance PTC element (19a) has the same width as the PTC heating elements (19) having the first nominal heating power.

6. Additional electric heating according to any of claims 1 to 5, wherein the first nominal heating power has a value between 50 Watts and 100 Watts, preferably a value of 70 Watts.

7. Additional electric heating according to any of claims 1 to 6, wherein the PTC heating elements (19) are arranged in levels in a layered structure of PTC heating elements (19) and radiator elements (11).

8. Additional electric heating according to claim 7, wherein the PTC heating elements (19) are held in one level in positioning frames (17).

9. Additional electric heating according to claim 8, wherein each positioning frame (17) comprises openings (18) only for the PTC heating elements (19, 19a) required in each case having the first and second nominal heating powers.

10. Additional electric heating according to claim 7, wherein in each of the levels a predetermined number of spaces (23) for PTC heating elements is provided and in one level for PTC heating elements having the first and second nominal heating powers not required spaces are filled with dummy elements.

11. Additional electric heating according to any of claims 1 to 10, wherein the additional electric heating is designed for low voltage operation, in particular for low voltages lower than 120 V.

12. Manufacturing process for an additional electric heating for a motor vehicle, comprising the steps of :
assembling the electric heating to a layered structure of a plurality of levels of PTC heating elements (19) and radiator elements (11) for dissipating heat to a medium flowing through the radiator elements (11), wherein each of the levels with PTC heating elements (19) comprises at least one PTC heating element (19) and the PTC heating elements (19) have the same first nominal power,
**characterized by the step of**
correcting the number of PTC heating elements (19) of one level provided on the basis of the first nominal heating power of the PTC heating elements (19) by inserting a tolerance PTC heating element (19a) having a second nominal heating power or by replacing a PTC heating element (19) having a first nominal heating power by a tolerance PTC heating element (19a) having a second nominal heating power in order to compensate variations of the heating power of the at least one PTC heating element (19) from the first nominal heating power in one level, wherein the second nominal heating power is one half, one third, or a quarter of the first nominal heating power.

13. Manufacturing process for an additional electric heating for a motor vehicle according to claim 12, wherein the PTC heating elements (19, 19a) having the first and the second nominal heating power essentially have the same dimensions.

## Revendications

1. Chauffage électrique additionnel pour un véhicule automobile, comprenant :
une pluralité d'étages chauffants comportant chacun au moins un élément chauffant à coefficient de température positif du type PTC (19), les éléments chauffants PTC (19) possédant la même première puissance de chauffe nominale, et
une pluralité d'éléments de radiateur (11) destinés à délivrer la chaleur produite à un fluide s'écoulant à travers les éléments de radiateur (11),
**c**aractérisé
en ce qu'au moins un des étages chauffants renferme un élément chauffant PTC de tolérance (19a) d'une deuxième puissance de chauffe nominale, pour la correction d'écarts, dus à la fabrication, de la puissance de chauffe dudit au moins un élément chauffant PTC (19) ayant la première puissance de chauffe nominale, la deuxième puissance de chauffe nominale étant égale à la moitié, à un tiers ou à un quart de la première puissance de chauffe nominale.

2. Chauffage électrique additionnel selon la revendication 1, dans lequel la grandeur de l'élément chauffant PTC de tolérance (19a) correspond environ à celle des éléments chauffants PTC (19) ayant la première puissance de chauffe nominale.

3. Chauffage électrique additionnel selon la revendication 1 ou la revendication 2, dans lequel l'élément chauffant PTC de tolérance (19a) possède la même épaisseur que les éléments chauffants PTC (19) ayant la première puissance de chauffe nominale.

4. Chauffage électrique additionnel selon la revendication 3, dans lequel l'élément chauffant PTC de tolérance (19a) possède, en outre, la même longueur que les éléments chauffants PTC (19) ayant la première puissance de chauffe nominale.

5. Chauffage électrique additionnel selon la revendication 3 ou la revendication 4, dans lequel l'élément chauffant PTC de tolérance (19a) possède, en outre, la même largeur que les éléments chauffants PTC (19) ayant la première puissance de chauffe nominale.

6. Chauffage électrique additionnel selon l'une des revendications 1 à 5, dans lequel la première puissance de chauffe nominale présente une valeur entre 50 Watt et 100 Watt, de préférence une valeur de 70 Watt.

7. Chauffage électrique additionnel selon l'une des revendications 1 à 6, dans lequel les éléments chauffants PTC (19) sont agencés dans des plans selon une configuration d'empilement de couches d'éléments chauffants PTC (19) et d'éléments de radiateur (11).

8. Chauffage électrique additionnel selon la revendication 7, dans lequel les éléments chauffants PTC (19) d'un plan sont maintenus dans un cadre de positionnement (17).

9. Chauffage électrique additionnel selon la revendication 8, dans lequel chaque cadre de positionnement (17) présente des ouvertures (18) uniquement pour les éléments chauffants PTC (19, 19a) de première et de deuxième puissance de chauffe nominale, respectivement nécessaires.

10. Chauffage électrique additionnel selon la revendication 7, dans lequel dans chacun des plans est prévu un nombre prédéterminé d'emplacements (23) pour des éléments chauffants PTC, et dans un plan pour éléments chauffants PTC de première et de deuxième puissance de chauffe nominale, des emplacements non nécessaires sont comblés par des éléments factices.

11. Chauffage électrique additionnel selon l'une des revendications 1 à 10, dans lequel le chauffage électrique additionnel est conçu pour un fonctionnement à basse tension, notamment pour des tensions inférieures à environ 120V.

12. Procédé de fabrication d'un chauffage électrique additionnel pour un véhicule automobile, comprenant les étapes suivantes :
assemblage du chauffage électrique en un empilement de couches, d'une pluralité de plans d'éléments chauffants PTC (19) et d'éléments de radiateur (11) destinés à délivrer la chaleur produite à un fluide s'écoulant à travers les éléments de radiateur (11), chacun des plans avec des éléments chauffants PTC (19) présentant au moins un élément chauffants PTC (19), et les éléments chauffants PTC (19) possédant la même première puissance de chauffe nominale,
**c**aractérisé par l'étape
de correction du nombre d'éléments chauffants PTC (19) dans un plan, prévu sur la base de la première puissance de chauffe nominale des éléments chauffants PTC (19), par insertion d'un élément chauffant PTC de tolérance (19a) d'une deuxième puissance de chauffe nominale, ou par remplacement d'un élément chauffant PTC (19) ayant la première puissance de chauffe nominale par un élément chauffant PTC de tolérance (19a) d'une deuxième puissance de chauffe nominale, en vue de compenser dans un plan, des écarts, dus à la fabrication, de la puissance de chauffe dudit au moins un élément chauffant PTC (19) ayant la première puissance de chauffe nominale, la deuxième puissance de chauffe nominale étant égale à la moitié, à un tiers ou à un quart de la première puissance de chauffe nominale.

13. Procédé de fabrication d'un chauffage électrique additionnel pour un véhicule automobile, selon la revendication 12, d'après lequel les éléments chauffants PTC (19, 19a) ayant la première et la deuxième puissance de chauffe nominale, présentent sensiblement la même grandeur.
